# EUROPÄISCHE PATENTSCHRIFT

(11) **EP 1 704 370 B1**
(45) Veröffentlichungstag und Bekanntmachung des Hinweises auf die Patenterteilung: **17.10.2007**
(21) Anmeldenummer: 05804339.9
(22) Anmeldetag: 25.11.2005
(51) Int. Cl.: F24F 13/068, F24F 3/16, F24F 11/00

(54) **FLÄCHENELEMENT ZUR TEMPERIERUNG VON RAUMLUFT**
FLAT ELEMENT FOR THERMALLY ADJUSTING INDOOR AIR
ELEMENT PLAT POUR TEMPERER L'AIR AMBIANT

(30) Priorität: 26.11.2004 CH 195004
(43) Veröffentlichungstag der Anmeldung: 27.09.2006
(73) Patentinhaber: LK Luftqualität AG, 6014 Littau (CH)
(72) Erfinder: FLEISCHER, Werner, CH-6103 Schwarzenberg (CH)
(74) Vertreter: Zink-Wild, Markus Peter
(86) Internationale Anmeldenummer: PCT/CH2005/000698
(87) Internationale Veröffentlichungsnummer: WO 2006/056095

(56) Entgegenhaltungen:
- EP-A- 0 962 720
- EP-A- 1 078 205
- GB-A- 316 779
- GB-A- 1 456 561

## Beschreibung

Die vorliegende Erfindung betrifft ein Flächenelement zur Temperierung von Raumluft und eine Vorrichtung zur Temperierung von Raumluft.

Die Temperierung von Raumluft kann mittels Luftkonvektion erfolgen. Dabei gibt es die verschiedensten Elemente für den Auslass von Luft, beispielsweise Drallauslässe, welche an einer Decke montiert sind.

Eine weitere Variante zur Temperierung von Raumluft besteht in der Nutzung von Deckenflächen, welche mit Wasser gekühlt sind. Wegen der Möglichkeit des Kondensierens von Wasserdampf an diesen mit Wasser gekühlten Oberflächen ist eine Lüftung mittels Fensterlüftung ausgeschlossen. Das bedeutet, dass solche mit Wasser gekühlte Oberflächen mit einer separaten, zentralen Zuluftversorgung kombiniert sein müssen.

Eine weitere Variante zur Temperierung von Raumluft umfasst die Flächentemperierung mittels Betonkernkühlung. Diese Art der Temperierung von Raumluft ist sehr träge.

In EP 1 078 205 B1 sind Luftkühlelemente beschrieben, welche in der Kühlwand Mikrolöcher haben. Diese Mikrolöcher haben einen Durchmesser von nicht mehr als 0,8 mm. Der freie Querschnitt in dieser Kühlwand beträgt nicht mehr als 2%, bezogen auf die Gesamtfläche der Kühlwand.

Zur Erzeugung von Turbulenzen in der Zuluft muss eine Vorkammer vorhanden sein. Solche Vorkammern haben ökonomische und technische Nachteile. Ein technischer Nachteil besteht darin, dass in die Vorkammer Auslassschlitze oder Löcher angebracht werden müssen, durch welche die Zuluft auf die Kühlwand geblasen werden muss.

Das wiederum bedeutet, dass gerichtete Luftströme entstehen. Dabei resultieren Kühlflächen mit unterschiedlichen Aktivitäten.

Diese Luftkühlelemente umfassen viele und konstruktiv aufwendige Einzelteile und sind deshalb entsprechend teuer.

Es ist ein Ziel der vorliegenden Erfindung, ein Flächenelement zur Temperierung von Raumluft, insbesondere zur Kühlung von Raumluft, beispielsweise in der Form eines Deckenelementes oder in der Form eines Wandelementes, zur Verfügung zu stellen.

Mit diesem Flächenelement soll die Zuluft über eine relativ grosse Fläche verteilt komfortabel und behaglich, insbesondere zugfrei, dynamisch anpassfähig und im Wesentlichen geräuschlos, in einen Raum eingebracht werden können.

Dieses Flächenelement soll über nur ein einziges Medium, nämlich Luft, betrieben werden können.

Mit diesem Flächenelement soll gleichzeitig eine gleichmässige Flächentemperierung (Nutzung der Wärmestrahlung) und eine Versorgung des Raumes mit der notwendigen Menge an Zuluft (Nutzung der Wärmekonvektion) ermöglicht werden.

Mit diesem Flächenelement soll ein im Wesentlichen laminarer Verdrängungsluftstrom erzeugt werden können.

Mit diesem Flächenelement soll der Entladungseffekt der vorzugsweise ionisierten Zuluft minimiert werden, das heisst, dass dieses Flächenelement keine Teile umfassen soll, welche den Entladungseffekt übermässig begünstigen.

Mit diesem Flächenelement soll die vorzugsweise ionisierte Zuluft im zu temperierenden Raum optimal wirken.

Es ist ein weiteres Ziel der vorliegenden Erfindung, ein Flächenelement zur Temperierung von Raumluft, insbesondere zur Kühlung von Raumluft, beispielsweise in der Form eines Deckenelementes oder in der Form eines Wandelementes, zur Verfügung zu stellen, mit welchem in speziellen Räumen mit einer hohen geforderten Reinraumcharakteristik Partikel aus der technologisch bedingten aktiven Zone verdrängt werden können.

Es ist ein weiteres Ziel der vorliegenden Erfindung, ein solches Flächenelement, zur Verfügung zu stellen, mit welchem die Bildung von Kondensat aus Wasserdampf an den wesentlichen Oberflächen dieses Flächenelementes verhindert werden kann.

Es ist ein weiteres Ziel der vorliegenden Erfindung, ein solches Flächenelement zur Verfügung zu stellen, mit welchem ein hoher Wärmetransport im zu temperierenden Raum möglich ist.

Dieses Flächenelement soll möglichst wenige und konstruktiv einfache Einzelteile umfassen.

Dieses Flächenelement soll eine möglichst geringe Einbauhöhe benötigen, damit die effektive Raumhöhe optimal genutzt werden kann.

Mit der vorliegenden Erfindung werden diese Ziele erreicht.

Das erfindungsgemässe Flächenelement 1 zur Temperierung von Raumluft, welches
- eine Luftführungskammer 2 mit offener Unterseite,
- eine aktive Deckenfläche 3 mit Mikrolöchern 4, welche die Luftführungskammer 2 auf ihrer offenen Unterseite abschliesst,
- eine Oberseite 5,
- mehrere Seitenwände 6a, 6b, und
- wenigstens eine Öffnung 7 für den Einlass von Luft, sowie
- eine im Wesentlichen luftdichte Verbindung zwischen Luftführungskammer 2 und aktiver Deckenfläche 3 umfasst,
ist dadurch gekennzeichnet, dass es
- wenigstens eine Öffnung 8 für den Auslass von Luft aufweist,
wobei in jede Öffnung 7 für den Einlass von Luft und in jede Öffnung 8 für den Auslass von Luft je ein Anschlussrohrstutzen 9 eingeführt und im Wesentlichen luftdicht verbunden ist, und
- die Oberseite 5 der Luftführungskammer 2 derart geformt ist, dass sie wenigstens eine Schikane 10 mit wenigstens einer Luftleitkante 11 aufweist, wobei
   -- diese Schikane(n) 10 zu der Seite der aktiven Deckenfläche 3 weist (weisen), welche zum Innern des Flächenelementes 1 gerichtet ist,
   -- diese Schikane(n) 10 in einer zugeführten Luftströmung Turbulenzen erzeugt (erzeugen), und
   -- diese Schikane(n) 10 quer zur Verbindungslinie zwischen der (den) Öffnung(en) 7 für den Einlass von Luft und der (den) Öffnung(en) 8 für den Auslass von Luft angeordnet ist (sind), und
- die Öffnung(en) 7 für den Einlass von Luft und die Öffnung(en) 8 für den Auslass von Luft sich in gegenüberliegenden Seitenwänden 6a befinden.

Die erfindungsgemässe Vorrichtung zur Temperierung von Raumluft, insbesondere zur Kühlung von Raumluft, ist dadurch gekennzeichnet, dass sie wenigstens eine Kolonne von erfindungsgemässen Flächenelementen 1a,1b,1c umfasst, welche miteinander im Wesentlichen luftdicht verbunden sind.

Bevorzugte Ausführungsformen dieser Erfindung sind in den abhängigen Ansprüchen definiert.

Im folgenden Teil werden mögliche Ausführungsformen der vorliegenden Erfindung beschrieben.

Dabei wird auch Bezug auf die Figuren genommen.

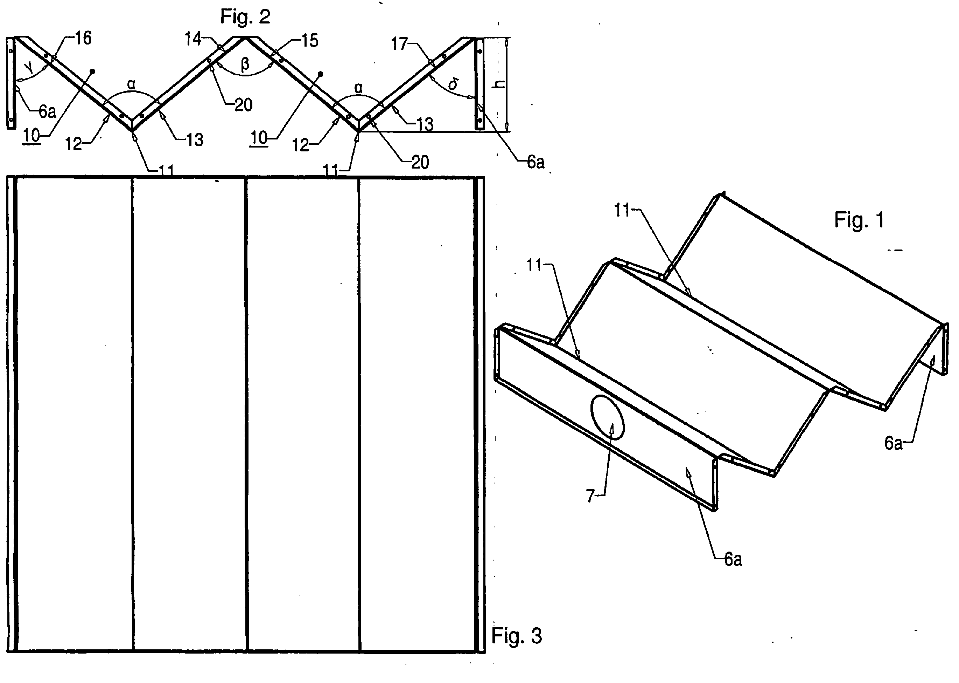

Figur 1 zeigt rein schematisch von schräg oben eine Draufsicht auf eine mögliche Oberseite 5 einer Luftführungskammer 2.
Figur 2 zeigt eine Seitenansicht der in Figur 1 dargestellten Oberseite 5 der Luftführungskammer 2.
Figur 3 zeigt eine Draufsicht auf die in Figur 1 dargestellte Oberseite 5 der Luftführungskammer 2.

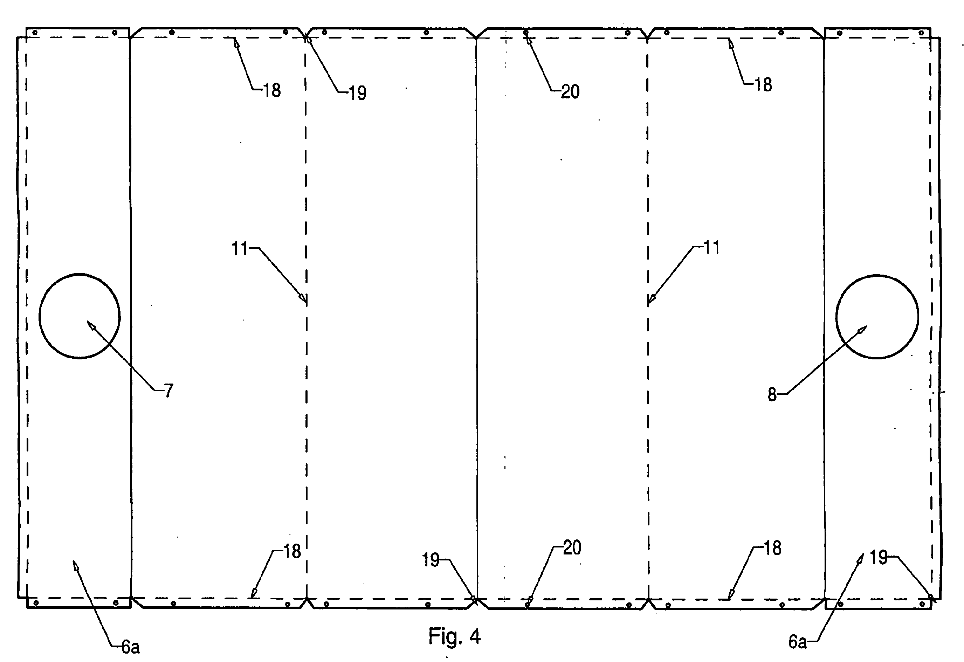

Figur 4 zeigt rein schematisch die Abwicklung der aus einem Stück gefertigten Oberseite 5 der Luftführungskammer 2, welche in Figur 1 dargestellt ist. In dieser Figur bedeuten die gestrichelten Linien Abkantungen nach unten, und die durchgezogenen Linien bedeuten Abkantungen nach oben.

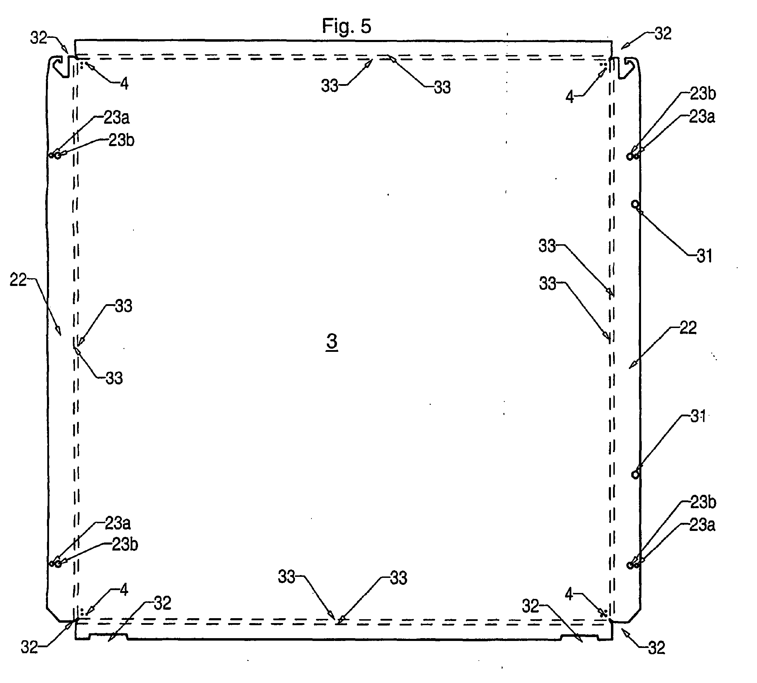

Figur 5 zeigt rein schematisch die Abwicklung der aus einem Stück gefertigten aktiven Deckenfläche 3 mit Mikrolöchern 4. In dieser Figur bedeuten die gestrichelten Linien Ankantungen nach unten. Die Mikrolöcher 4 sind nur andeutungsweise in allen vier Ecken gezeigt.

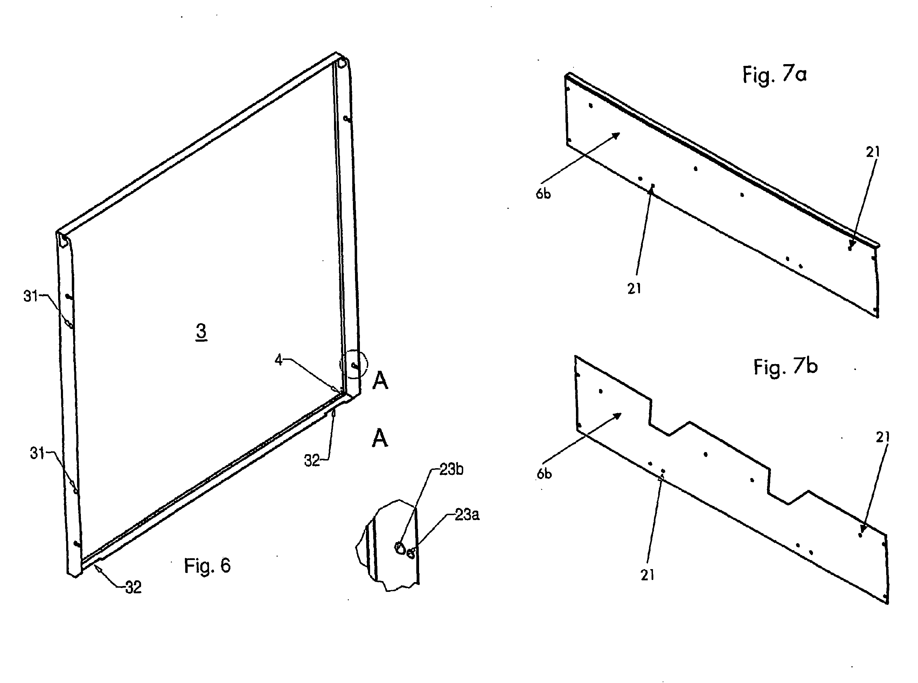

Figur 6 zeigt rein schematisch eine perspektivische Ansicht der nach innen gerichteten Seite der aktiven Deckenfläche 3, deren Abwicklung in Figur 5 gezeigt ist.
Figur 7a zeigt rein schematisch von schräg oben eine Draufsicht auf eine mögliche Seitenwand 6b für eine Luftführungskammer 2.
Figur 7b zeigt rein schematisch von schräg oben eine Draufsicht auf eine mögliche Seitenwand 6b mit Aussparungen für eine Luftführungskammer 2.

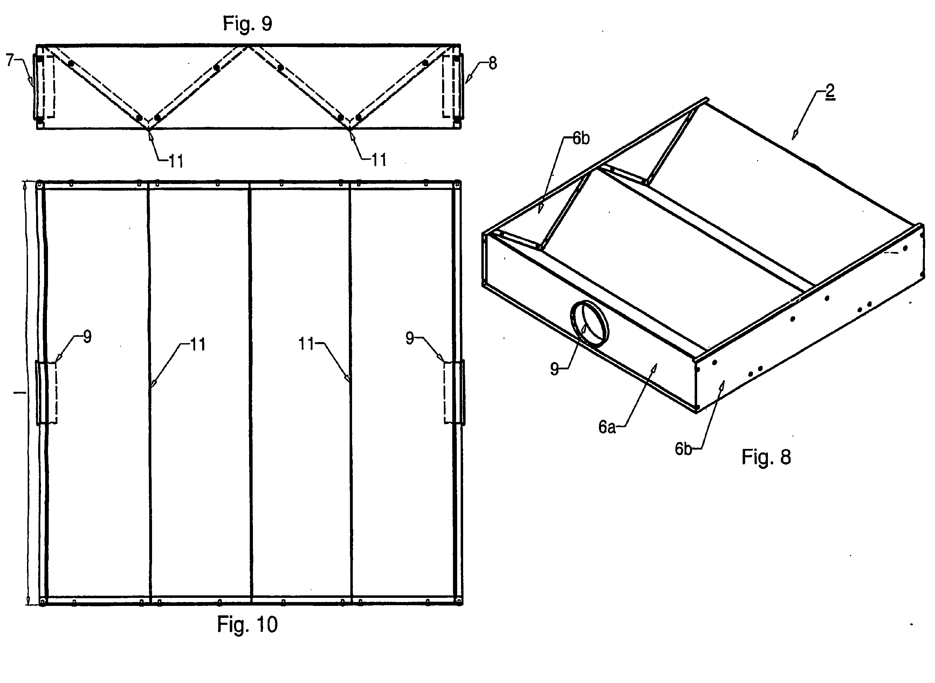

Figur 8 zeigt rein schematisch von schräg oben eine Draufsicht auf eine mögliche Luftführungskammer 2 mit montierten Seitenwänden 6b und Anschlussrohrstutzen 9.
Figur 9 zeigt eine Seitenansicht der in Figur 8 dargestellten Luftführungskammer 2.
Figur 10 zeigt eine Draufsicht auf die in Figur 8 dargestellte Luftführungskammer 2.
Figuren 11a bis 11d zeigen verschiedene Ansichten einer geeigneten Halteklammer 30 für die Aufhängung einer Luftführungskammer 2.
Figur 12 zeigt den Querschnitt durch ein geeignetes Deckenrasterprofil 25, an welches eine Halteklammer 30, eine Luftführungskammer 2 und eine aktive Deckenfläche 3 montiert sind.

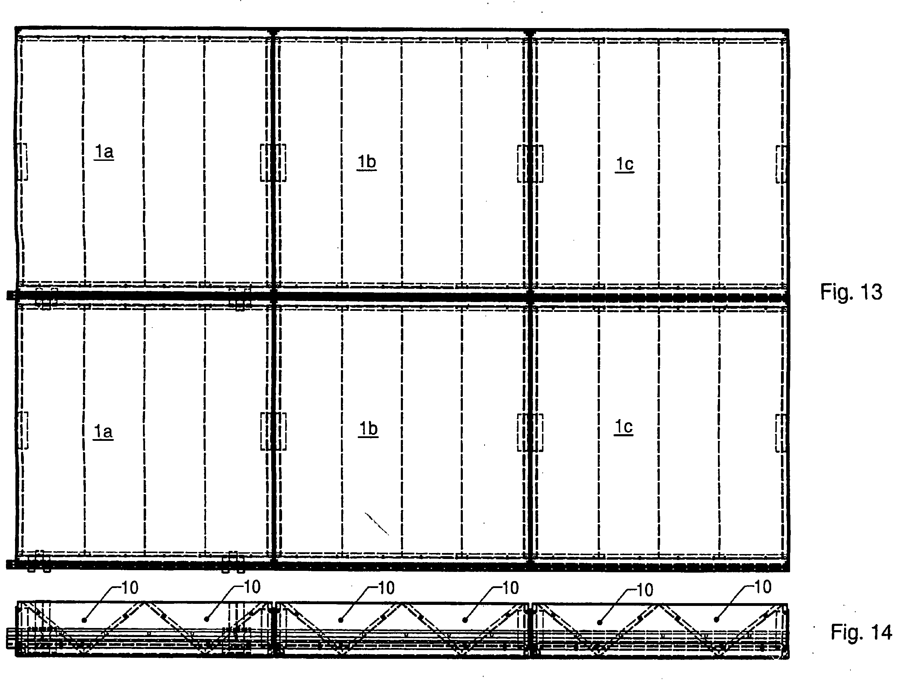

Figur 13 zeigt eine Draufsicht auf eine mögliche Vorrichtung zur Temperierung von Raumluft. Diese Vorrichtung umfasst zwei Kolonnen mit je drei Flächenelementen 1a, 1b, 1c.
Figur 14 zeigt eine Seitenansicht der in Figur 13 dargestellten Vorrichtung zur Temperierung von Raumluft.

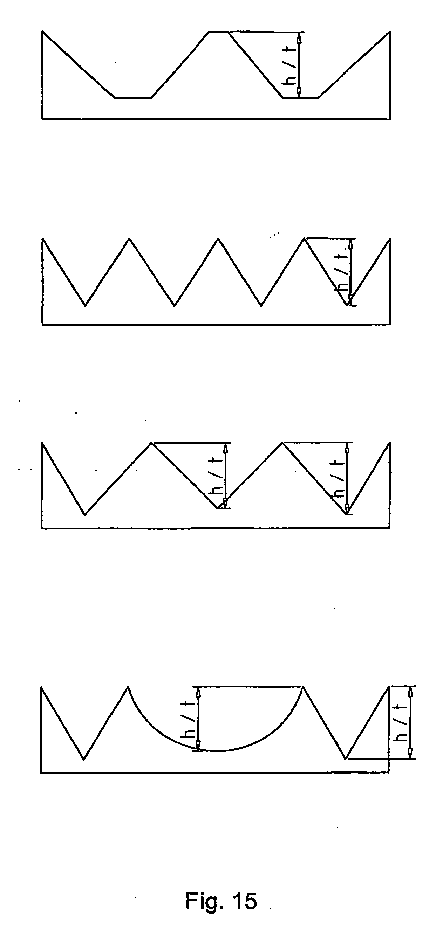

Figur 15 zeigt in nicht abschliessender Weise Querschnitte und Anordnungen durch mögliche Formen von Schikanen 10.
Figur 16 zeigt rein schematisch ein mögliches Schema, gemäss welchem eine situationsgerechte Ionisation der Zuluft gewährleistet werden kann.

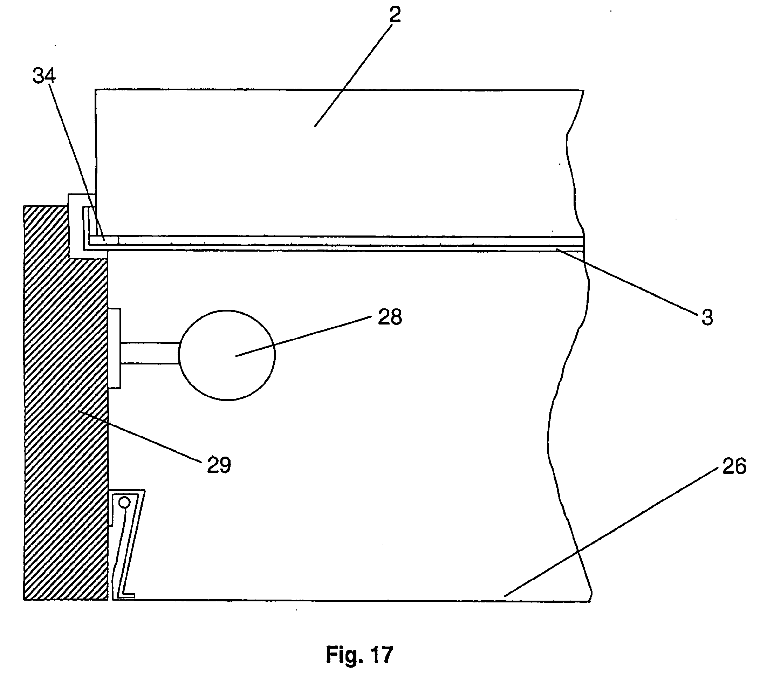

Figur 17 zeigt rein schematisch eine mögliche Art der Anordnung einer separat aufgehängten Folie 26 und einer Lichtquelle 28.

Eine.Luftführungskammer 2 wurde wie folgt hergestellt:

Zur Herstellung der Oberseite 5 einer Luftführungskammer 2 wurde ein 0,75 mm dickes elektrolytisch verzinktes Stahlblech verwendet, welches eine Länge von 960 mm und eine Breite von 577 mm hatte.

In beide Stirnseiten 6a wurde eine Öffnung 7 für den Einlass von Luft und eine Öffnung 8 für den Auslass von Luft gestanzt. Beide Öffnungen 7,8 hatten einen Durchmesser von 83 mm.

An beiden Längsseiten wurden Löchern 20 angebracht, welche zur Befestigung mit den Seitenwänden 6b dienen.

An beiden Längsseiten sowie an beiden Stirnseiten 6a wurden Freistanzungen 19 und Abkantungen 18 um einen Winkel von 90° nach unten angebracht.

Im Abstand von 118 mm, 301 mm und 480 mm von der Stirnseite 6a mit der Öffnung 8 für den Auslass von Luft und im Abstand von 118 mm und 301 mm von der Stirnseite 6a mit der Öffnung 7 für den Einlass von Luft wurden an den entsprechenden Stellen Abkantungen um die Winkel α, β, γ und δ alternierend nach oben und nach unten angebracht.

Der Winkel α hatte einen Wert von 103°, und der Winkel β hatte einen Wert von 102°. Die Winkel γ und δ waren gleich gross und hatten je einen Wert von 52°.

Die so hergestellte Oberseite 5 der Luftführungskammer 2 hatte zwei Schikanen 10 mit je einem dreieckigen Querschnitt. Die Höhe h dieser beiden Schikanen 10 betrug 113 mm.

Die Länge der Oberseite 5 dieser Luftführungskammer 2 betrug 590 mm, und die Breite der Oberseite 5 dieser Luftführungskammer 2 betrug 560 mm.

Es wurden zwei Seitenwände 6b aus 1 mm dickem elektrolytisch verzinktem Stahlblech hergestellt. Diese Seitenwände 6b hatten eine Länge von 590 mm und eine Höhe von 112 mm und waren entlang einer Längsseite um 10 mm um einen Winkel von 90° abgekantet. Diese Abkantung dient als Anschlag für eine Halteklammer 30.

Diese Seitenwände 6b wiesen Löcher 21 auf, welche auf die Löcher 20 in den Längsseiten der Oberseite 5 der Luftführungskammer 2 abgestimmt waren.

Beide Seitenwände 6b wurden mit der Oberseite 5 der Luftführungskammer 2 mittels Popnieten im Wesentlichen luftdicht verbunden.

Diese Seitenwände 6b dienen auch zur Stabilisierung der Oberseite 5 der Luftführungskammer 2.

In die Öffnung 7 für den Einlass von Luft und in die Öffnung 8 für den Auslass von Luft wurde je ein Anschlussrohrstutzen 9 eingeführt.

Ein solcher Anschlussrohrstutzen 9 hatte einen äusseren Durchmesser von 83 mm und einen inneren Durchmesser von 80 mm, eine Höhe von 28 mm und war auf der einen Seite über eine Länge von etwa 5 mm um einen Winkel von 30° nach aussen gebogen, so dass ein äusserer Winkel von 150° gebildet wurde.

Beide Anschlussrohrstutzen 9 wurden je an vier Punkten angeschweisst und mit Silikon umlaufend abgedichtet, so dass ein im Wesentlichen luftdichter Verbund entstand.

Es wäre auch möglich, eine Luftführungskammer 2 im Spritzgussverfahren oder im Tiefziehverfahren herzustellen.

Eine aktive Deckenfläche 3 mit Mikrolöchern 4 wurde wie folgt hergestellt:

Es wurde ein 0,6 mm dickes elektrolytisch verzinktes Stahlblech verwendet, welches eine Länge von 663 mm und eine Breite von 635 mm hatte.

In quadratischer Anordnung wurden entlang der Länge und entlang der Breite im Abstand von jeweils 5 mm je 117 Mikrolöcher 4 mit einem Durchmesser von je 1 mm gestanzt.

Im gleichen Arbeitsgang wurden an einer Breitseite auch Löcher 31 angebracht, welche als Aufhängelöcher für eine Oberflächenbehandlung, beispielsweise eine Pulverbeschichtung, dienen.

Anschliessend wurden an den gewünschten Stellen an beiden Längsseiten sowie an beiden Breitseiten Freistanzungen 32 angebracht.

Danach erfolgte das Austrennen aus der Tafel.

An beiden Breitseiten wurden unterschiedlich grosse Prägungen 23a,23b angebracht. Die kleinen Prägungen 23a dienen dem Einrasten in ein Deckenrasterprofil 25, und die grossen Prägungen 23b dienen als Anschlag.

Danach wurden die Abkantungen 33 um je einen Winkel von 45° nach unten angebracht.

Im Prinzip würde auf jeder Seite eine einzige Abkantung 33 reichen. Es ist jedoch bevorzugt, auf jeder Seite zwei Abkantungen 33 anzubringen, da zwei Abkantungen 33 bei einem fertig montierten Flächenelement 1 ein optisch besseres Erscheinungsbild ergeben. Der Abstand zwischen zwei Abkantungen 33 kann etwa 5 mm betragen.

Das so hergestellte Stück wurde zwecks Farbgebung einer herkömmlichen Pulverbeschichtung zugeführt.

Anschliessend wurde auf der in montierter Form nicht sichtbaren Seite entlang den Abkantungen 33 das Abdichtungsmaterial 34 befestigt. Dabei kann ein Dichtungsstreifen, insbesondere aus einem selbstklebenden Zellkautschuk, verwendet werden. Speziell geeignet sind die unbrennbaren Polyurethanschaumstreifen "Stop-Fire" der Firma Maag Technik AG in CH-8602 Dübendorf / Schweiz.

Erfindungsgemässe Flächenelemente 1 können wie folgt zu einer erfindungsgemässen Vorrichtung zur Temperierung von Raumluft, insbesondere zur Kühlung von Raumluft, an einer Decke aufgehängt und miteinander verbunden werden:

Eine Kolonne von Flächenelementen 1a, 1b, 1c kann von zwei bis acht, insbesondere von zwei bis sechs, vorzugsweise von vier bis sechs, Flächenelemente 1a,1b,1c umfassen.

An einer Deckenunterkonstruktion werden Aufhängehalterungen befestigt. In diese Aufhängehalterungen werden parallel zueinander schienenförmige Deckenrasterprofile 25 befestigt, insbesondere in beweglicher Form aufgehängt.

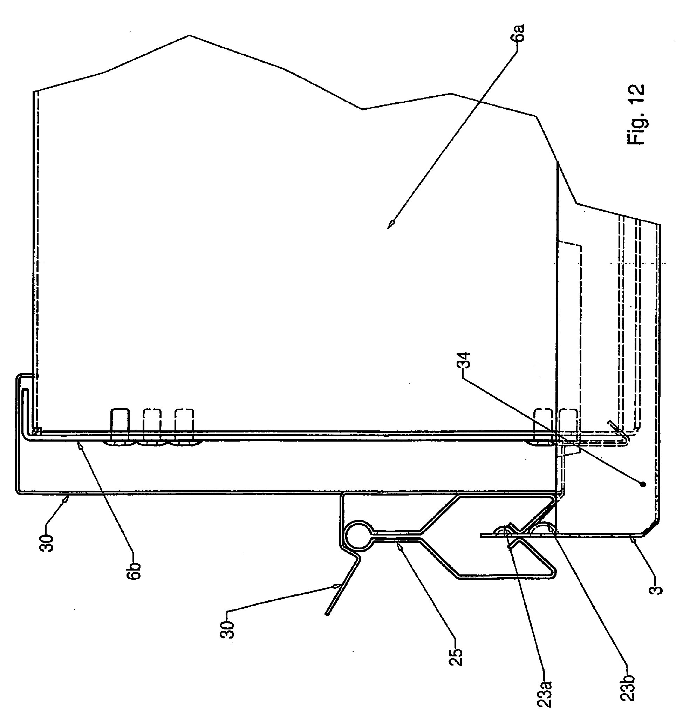

Deckenrasterprofile 25, welche den in Figur 12 gezeigten Querschnitt haben, sind für die Zwecke der vorliegenden Erfindung speziell geeignet.

Es ist bevorzugt, für die Aufhängung einer Luftführungskammer 2 zwei parallel zueinander angeordnete schienenförmige Deckenrasterprofile 25 zu verwenden.

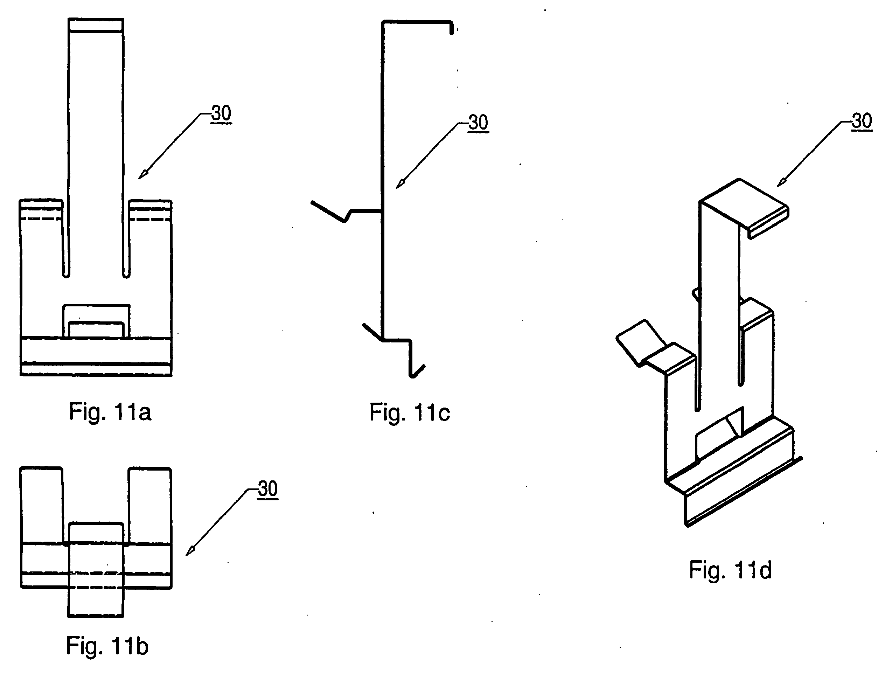

Anschliessend werden die in den Figuren 11a bis 11d gezeigten Halteklammern 30 in die beiden Deckenrasterprofile 25 eingeklinkt.

Es ist bevorzugt, für die Aufhängung einer Luftführungskammer 2 an jedem der beiden schienenförmigen Deckenrasterprofile 25 zwei Halteklammern 30 einzuklinken.

Anschliessend wird eine erste Luftführungskammer 2a an den genannten vier Halteklammern 30 aufgehängt.

Alle weiteren Luftführungskammern 2b, 2c werden analog aufgehängt.

Die so aufgehängten Luftführungskammern 2a,2b,2c können miteinander wie folgt verbunden werden:

Der Anschlussrohrstutzen 9, welcher sich in der Öffnung 7 für den Einlass von Luft in der ersten Luftführungskammer 2a befindet, wird mit einer Leitung verbunden ist, in welche Zuluft eingespeist wird.

Der Anschlussrohrstutzen 9, welcher sich in der Öffnung 8 für den Auslass von Luft in der ersten Luftführungskammer 2a befindet, wird mit dem Anschlussrohrstutzen 9, welcher sich in der Öffnung 7 für den Einlass von Luft in der zweiten Luftführungskammer 2b befindet, mit einer Muffe mit einem mittig angebrachten Anschlag und mit Lippendichtungen verbunden.

Geeignete Muffen für diesen Zweck sind bei der Firma Schmidlin AG in CH-8910 Affoltern am Albis / Schweiz erhältlich.

Alle weiteren Luftführungskammern 2c,2d werden analog zur Verbindung der ersten Luftführungskammer 2a mit der zweiten Luftführungskammer 2b miteinander verbunden.

Der Anschlussrohrstutzen 9, welcher sich in der Öffnung 8 für den Auslass von Luft in der letzten Luftführungskammer 2c einer Kolonne befindet, wird mit einer Abschlusskappe 24 verschlossen.

Dabei ist darauf zu achten, dass alle vorgenannten Verbindungen im Wesentlichen luftdicht sind.

Anschliessend wird die jeweils benötigte Anzahl von aktiven Deckenflächen 3 mit Mikrolöchern 4 in die beiden Deckenrasterprofile 25 eingeklinkt und ausgerichtet, so dass ein optisch exaktes Fugenbild.entsteht.

In eine solche erfindungsgemässe Vorrichtung wird vorzugsweise ionisierte Zuluft eingespeist. Ionisierte Zuluft wird vorzugsweise gemäss dem in DE 100 07 523 beschriebenen Verfahren hergestellt.

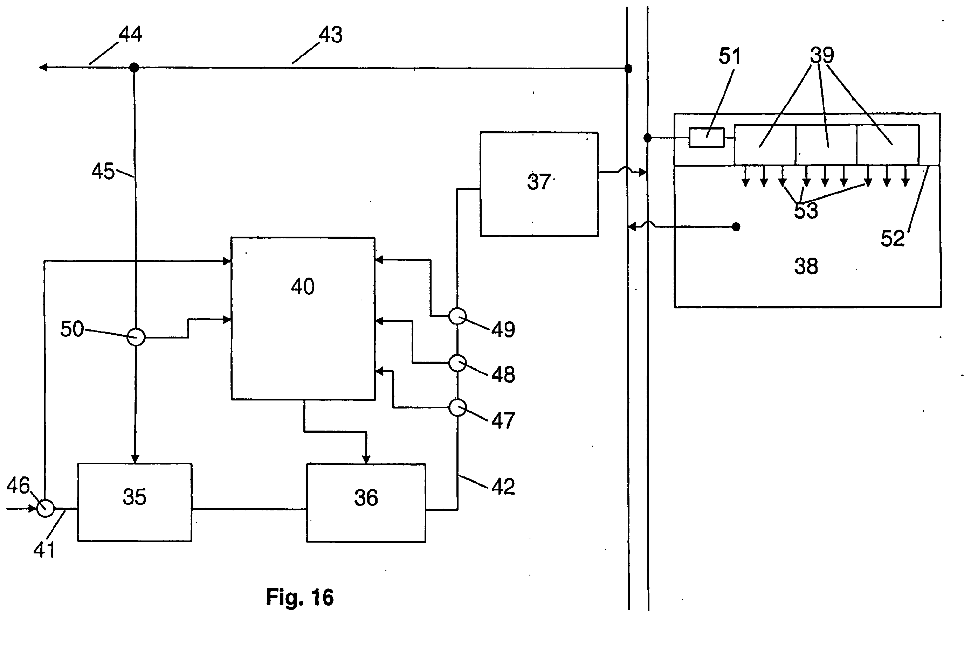

In Figur 16 ist ein mögliches Schema gezeigt, gemäss welchem eine situationsgerechte Ionisation der Zuluft gewährleistet werden kann. Die in Figur 16 verwendeten Bezugszeichen haben folgende Bedeutung:
35 Vorrichtung zur Luftaufbereitung
36 Vorrichtung zur Ionisierung von Luft
37 Vorrichtung zur Temperierung der Zuluft
38 zu temperierender Raum
39 erfindungsgemässe Flächenelemente 1
40 Vorrichtung zur Regelung der situationsgerechten Zuluftionisierung
41 Aussenluftleitung
42 Zuluftleitung
43 Abluftleitung
44 Fortluftleitung
45 Umluftleitung
46 Luftqualitätssensor
47 Ozonsensor
48 Luftfeuchtefühler
49 Luftströmungsfühler
50 Luftqualitätssensor
51 Regler für den Zuluftvolumenstrom
52 separat aufgehängte Folie 26
53 laminarer Verdrängungsluftstrom.

Wegen dem mit der erfindungsgemässen Vorrichtung erzielten laminaren Verdrängungsluftstrom befindet sich der Nutzer im entsprechend klimatisierten Raum in direkter Weise im entsprechend aufbereiteten Zuluftstrom.

Eine weiterer Vorteil des mit der erfindungsgemässen Vorrichtung erzielten laminaren Verdrängungsluftstromes besteht darin, dass an der nach aussen gerichteten Seite, also der sichtbaren Seite, der aktiven Deckenfläche 3 keine Partikel abgelagert werden können, und somit keine wesentliche Verschmutzung der sichtbaren Fläche auftreten kann.

Ebenso kann wegen dem laminaren Verdrängungsluftstrom an der sichtbaren Seite der aktiven Deckenfläche 3 kein Wasserdampf kondensieren.

In der vorliegenden Erfindung werden folgende Bezugszeichen verwendet:
1 Flächenelement
2 Luftführungskammer
3 aktive Deckenfläche
4 Mikrolöcher
5 Oberseite
6a, 6b Seitenwände
7 Öffnung für den Einlass von Luft
8 Öffnung für den Auslass von Luft
9 Anschlussrohrstutzen
10 Schikane
11 Luftleitkante
12 unterer Teil der Frontseite einer Schikane
13 unterer Teil der Rückseite einer Schikane
14 Schikane oberer Teil der Rückseite einer ersten
15 Schikane oberer Teil der Frontseite einer zweiten
16 Schikane oberer Teil der Frontseite einer ersten
17 oberer Teil der Rückseite der letzten Schikane
18 Abkantungen
19 Freistanzungen
20, 21 Löcher
22 Seitenwände
23 Halteteile und/oder Arretierungen
24 Abschlusskappe
25 Deckenrasterprofile
26 Folie
27 Mikrolöcher in der Folie 26
28 Lichtquelle
29 Rahmen
30 Halteklammer
31 Löcher
32 Freistanzungen
33 Abkantungen
34 Abdichtungsmaterial.

## Patentansprüche

1. Flächenelement (1) zur Temperierung von Raumluft, welches
- eine Luftführungskammer (2) mit offener Unterseite,
- eine aktive Deckenfläche (3) mit Mikrolöchern (4), welche die Luftführungskammer (2) auf ihrer offenen Unterseite abschliesst,
- eine Oberseite (5),
- mehrere Seitenwände (6a, 6b), und
- wenigstens eine Öffnung (7) für den Einlass von Luft, sowie
- eine im Wesentlichen luftdichte Verbindung zwischen Luftführungskammer (2) und aktiver Deckenfläche (3) umfasst,
**dadurch gekennzeichnet, dass** es
- wenigstens eine Öffnung (8) für den Auslass von Luft aufweist,
wobei in jede Öffnung (7) für den Einlass von Luft und in jede Öffnung (8) für den Auslass von Luft je ein Anschlussrohrstutzen (9) eingeführt und im Wesentlichen luftdicht verbunden ist, und
- die Oberseite (5) der Luftführungskammer (2) derart geformt ist, dass sie wenigstens eine Schikane (10) mit wenigstens einer Luftleitkante (11) aufweist, wobei
-- diese Schikane(n) (10) zu der Seite der aktiven Deckenfläche (3) weist (weisen), welche zum Innern des Flächenelementes (1) gerichtet ist,
-- diese Schikane(n) (10) in einer zugeführten Luftströmung Turbulenzen erzeugt (erzeugen), und
-- diese Schikane(n) (10) quer zur Verbindungslinie zwischen der (den) Öffnung(en) (7) für den Einlass von Luft und der (den) Öffnung(en) (8) für den Auslass von Luft angeordnet ist (sind), und
- die Öffnung(en) (7) für den Einlass von Luft und die Öffnung(en) (8) für den Auslass von Luft sich in gegenüberliegenden Seitenwänden (6a) befinden.

2. Flächenelement nach Anspruch 1, **dadurch gekennzeichnet, dass** es von zwei bis zehn Schikanen (10), insbesondere zwei Schikanen (10), in der Oberseite (5) der Luftführungskammer (2) aufweist, und dass die Schikanen (10) entweder wellenförmig oder stufenförmig ausgebildet sind, einschliesslich beliebige Kombinationen davon, wobei entsprechende Luftleitkanten (11) vorzugsweise abgerundet sind, beispielsweise mit einem Radius von 1 mm bis 10 mm, vorzugsweise von 1 mm bis 5 mm, insbesondere von 3 mm.

3. Flächenelement nach einem der Ansprüche 1 bis 2, **dadurch gekennzeichnet, dass** wellenförmig ausgebildete Schikanen (10) unabhängig voneinander entweder gleiche oder ungleiche Wellenlängen λ und gleiche oder ungleiche Amplituden ŷ aufweisen, wobei eine Anordnung mit gleichen Wellenlängen λ und mit gleichen oder ungleichen Amplituden ŷ bevorzugt ist.

4. Flächenelement nach einem der Ansprüche 1 bis 2, **dadurch gekennzeichnet, dass** stufenförmig ausgebildete Schikanen (10) unabhängig voneinander entweder symmetrisch oder asymmetrisch angeordnet sind und entweder gleiche oder ungleiche Höhen h respektive Tiefen t aufweisen, wobei eine symmetrische Anordnung mit gleichen oder ungleichen Höhen h respektive Tiefen t bevorzugt ist.

5. Flächenelement nach einem der Ansprüche 1 bis 4, **dadurch gekennzeichnet, dass** der Querschnitt durch die jeweils vorhandenen Schikanen (10) unabhängig voneinander entweder die Form eines Dreieckes hat, insbesondere die Form eines gleichschenkligen Dreiecks; oder eine beliebige polygonale Form hat, einschliesslich beliebige Kombinationen davon.

6. Flächenelement nach einem der Ansprüche 1 bis 5, **dadurch gekennzeichnet, dass** bei einer Schikane (10) mit einer Seitenlänge 1 von 600 mm der Abstand d zwischen dem unteren Ende der untersten Luftleitkante (11) an dieser Schikane (10) und der nach innen gerichteten Seite der aktiven Deckenfläche (3) von 1 mm bis 25 mm, vorzugsweise von 1 mm bis 20 mm, beträgt, wobei beim Vorhandensein von mehreren Schikanen (10) der Abstand d für jede einzelne Schikane (10) individuell definiert ist.

7. Flächenelement nach einem der Ansprüche 1 bis 6, **dadurch gekennzeichnet, dass** der Abstand d zwischen dem unteren Ende der Luftleitkante (11) an einer Schikane (10) und der nach innen gerichteten Seite der aktiven Deckenfläche (3) mittels einem an die Luftleitkante (11) und/oder an der Schikane (10) befestigbaren, insbesondere aufklebbaren oder verschraubbaren, Profil einstellbar ist, wobei dieses Profil vorzugsweise abgerundet ist, beispielsweise mit einem Radius von 1 mm bis 10 mm, vorzugsweise von 1 mm bis 5 mm, insbesondere von 3 mm, und wobei beim Vorhandensein von mehreren Schikanen (10) der Abstand d für jede einzelne Schikane (10) individuell definiert ist.

8. Flächenelement nach einem der Ansprüche 1 bis 7, **dadurch gekennzeichnet, dass** bei stufenförmig ausgebildeten Schikanen (10) mit einem dreieckigen Querschnitt
- der Winkel α zwischen dem unteren Teil der Frontseite (12) und dem unteren Teil der Rückseite (13) einer Schikane (10) von 72° bis 134°, vorzugsweise von 95° bis 110°, insbesondere etwa 103°; beträgt,
- der Winkel β zwischen dem oberen Teil der Rückseite (14) einer ersten Schikane (10) und dem oberen Teil der Frontseite (15) einer zweiten Schikane (10) von 75° bis 140°, vorzugsweise von 100° bis 115°, insbesondere etwa 102°, beträgt,
- der Winkel Y zwischen der Seitenwand (6a) mit der (den) Öffnung(en) (7) für den Einlass von Luft und dem oberen Teil der Frontseite (16) einer ersten Schikane (10) von 38° bis 72°, vorzugsweise von 50° bis 60°, insbesondere etwa 52°, beträgt, und dass
- der Winkel δ zwischen der Seitenwand (6a) mit der (den) Öffnung(en) (8) für den Auslass von Luft und dem oberen Teil der Rückseite (17) der letzten Schikane (10) von 38° bis 72°, vorzugsweise von 50° bis 60°, insbesondere etwa 52°, beträgt,
wobei der Winkel γ und der Winkel δ vorzugsweise gleich gross sind.

9. Flächenelement nach einem der Ansprüche 1 bis 8, **dadurch gekennzeichnet, dass** die Oberseite (5) der Luftführungskammer (2) aus einem Stück gefertigt ist, und folgende Teilelemente aufweist:
- an den Längsseiten angeordnete Abkantungen (18) mit Freistanzungen (19) und mit Löchern (20), welche zur Befestigung mit weiteren Teilen dienen,
- eine erste Stirnseite (6a) mit einer Abkantung, welche der Stabilisierung dient, und mit einer bis drei symmetrisch angeordneten Öffnung (en) (7) für den Einlass von Luft, vorzugsweise mit einer mittig angeordneten Öffnung (7) für den Einlass von Luft,
- eine zweite Stirnseite (6a) mit einer Abkantung, welche der Stabilisierung dient, und mit einer bis drei symmetrisch angeordneten Öffnung(en) (8) für den Auslass von Luft, vorzugsweise mit einer mittig angeordneten Öffnung (8) für den Auslass von Luft, und dass
in jede Öffnung (7) für den Einlass von Luft und in jede Öffnung (8) für den Auslass von Luft je ein Anschlussrohrstutzen (9) eingeführt und im Wesentlichen luftdicht verbunden ist, und
- fünf quer, insbesondere senkrecht, zur kürzesten Verbindungslinie zwischen einer Öffnung (7) für den Einlass von Luft und einer Öffnung (8) für den Auslass von Luft angeordnete Abkantungen, entlang welchen die Oberseite (5) der Luftführungskammer (2) an den entsprechenden Stellen alternierend nach unten und nach oben um die Winkel α, β, γ und δ gebogen ist, und so zwei Schikanen (10) mit je einem dreieckigen Querschnitt bilden.

10. Flächenelement nach einem der Ansprüche 1 bis 9, **dadurch gekennzeichnet, dass** die Oberseite (5) der Luftführungskammer (2) mit zwei Seitenwänden (6b), welche Löcher (21) aufweisen, im Wesentlichen luftdicht verbunden ist, beispielsweise mittels Popnieten, welche durch die Löcher (20) in den seitlichen Abkantungen (18) und durch die Löcher (21) in den Seitenwänden (6b) geschoben sind, wobei die genannten Löcher (20,21) aufeinander abgestimmt sind, und wobei die Seitenwände (6b) vorzugsweise Aussparungen aufweisen, welche insbesondere der Kantenführung der vorhandenen Schikanen (10) angepasst sind.

11. Flächenelement nach einem der Ansprüche 1 bis 10, **dadurch gekennzeichnet, dass** auf die Aussenseite der Oberseite (5) der Luftführungskammer (2) ein Isolationsmaterial aufgebracht ist, beispielsweise ein unbrennbarer Polyurethanschaum.

12. Flächenelement nach einem der Ansprüche 1 bis 11, **dadurch gekennzeichnet, dass** die Luftführungskammer (2) aus einem Metall oder aus einer Metalllegierung hergestellt ist, beispielsweise aus Aluminium, vorverzinktem Stahlblech, elektrolytisch verzinktem Stahlblech, nicht rostendem Stahlblech, Kupfer, Messing.

13. Flächenelement nach einem der Ansprüche 1 bis 12, **dadurch gekennzeichnet, dass** die Luftführungskammer (2) eine Länge von 40 cm bis 160 cm, insbesondere von 50 cm bis 130 cm, vorzugsweise etwa 60 cm, eine Breite von 40 cm bis 80 cm, insbesondere von 45 cm bis 65 cm, vorzugsweise etwa 60 cm, und eine Höhe von 8 cm bis 14 cm, insbesondere von 10 cm bis 14 cm, vorzugsweise etwa 12 cm, hat.

14. Flächenelement nach einem der Ansprüche 1 bis 13, **dadurch gekennzeichnet, dass** die Mikrolöcher (4) in der aktiven Deckenfläche (3) rund sind und einen Durchmesser von etwa 0,50 mm bis etwa 1,20 mm, vorzugsweise von etwa 0,60 mm bis etwa 1,00 mm, insbesondere etwa 0,65 mm, haben und in einer geraden oder versetzten, regelmässigen oder unregelmässigen Reihenanordnung vorhanden sind.

15. Flächenelement nach einem der Ansprüche 1 bis 14, **dadurch gekennzeichnet, dass** die aktive Deckenfläche (3) aus einem Metallblech hergestellt ist, beispielsweise aus einem elektrolytisch verzinkten Stahlblech, und eine Dicke von etwa 0,4 mm bis etwa 1,5 mm, vorzugsweise von etwa 0,5 mm bis etwa 0,8 mm, insbesondere von etwa 0,6 mm, hat.

16. Flächenelement nach einem der Ansprüche 1 bis 15, **dadurch gekennzeichnet, dass** die nach aussen gerichtete Seite, also die sichtbare Seite, der aktiven Deckenfläche (3) im Rohzustand belassen ist, oder dass diese Seite oberflächenbehandelt ist, beispielsweise zwecks Farbgebung pulverbeschichtet ist.

17. Flächenelement nach einem der Ansprüche 1 bis 16, **dadurch gekennzeichnet, dass** wenigstens zwei sich gegenüberliegende Seitenwände (22) der aktiven Deckenfläche (3) Halteteile und/oder Arretierungen (23), beispielsweise vorstehende Prägungen oder Noppen, aufweisen.

18. Flächenelement nach einem der Ansprüche 1 bis 17, **dadurch gekennzeichnet, dass** der freie Querschnitt in der aktiven Deckenfläche (3) von etwa 1% bis etwa 4 %, vorzugsweise wenigstens etwa 2 %, bezogen auf die Gesamtfläche der aktiven Deckenfläche (3), beträgt.

19. Flächenelement nach einem der Ansprüche 1 bis 18, **dadurch gekennzeichnet, dass** der im Wesentlichen luftdichte Verbund zwischen der Luftführungskammer (2) und der aktiven Deckenfläche (3) mittels einem Abdichtungsmaterial (34) erfolgt, beispielsweise mit einem Dichtungsstreifen, insbesondere aus einem selbstklebenden Zellkautschuk.

20. Vorrichtung zur Temperierung von Raumluft, insbesondere zur Kühlung von Raumluft, **dadurch gekennzeichnet, dass** sie wenigstens eine Kolonne von Flächenelementen (1a, 1b, 1c) nach einem der Ansprüche 1 bis 19 umfasst, welche miteinander im Wesentlichen luftdicht verbunden sind.

21. Vorrichtung nach Anspruch 20, **dadurch gekennzeichnet, dass**
- der Anschlussrohrstutzen (9), welcher sich in der Öffnung (7) für den Einlass von Luft in einer ersten Luftführungskammer (2) befindet, mit einer Leitung verbunden ist, in welche Zuluft eingespeist wird,
- der Anschlussrohrstutzen (9), welcher sich in der Öffnung (8) für den Auslass von Luft in der ersten Luftführungskammer (2) befindet, mit dem Anschlussrohrstutzen (9), welcher sich in der Öffnung (7) für den Einlass von Luft in der zweiten Luftführungskammer (2) befindet, verbunden ist,
- alle weiteren Luftführungskammern (2) analog zur Verbindung der ersten Luftführungskammer (2) mit der zweiten Luftführungskammer (2) miteinander verbunden sind,
- der Anschlussrohrstutzen (9), welcher sich in der Öffnung (8) für den Auslass von Luft in der letzten Luftführungskammer (2) der genannten Kolonne befindet, mit einer Abschlusskappe (24) verschlossen ist, und wobei
- alle vorgenannten Verbindungen im Wesentlichen luftdicht sind.

22. Vorrichtung nach einem der Ansprüche 20 bis 21, **dadurch gekennzeichnet, dass** die Verbindung zwischen den einzelnen Luftführungskammern (2) mittels einer Muffe mit einem mittig angebrachten Anschlag und mit Lippendichtungen erfolgt.

23. Vorrichtung nach einem der Ansprüche 20 bis 22, **dadurch gekennzeichnet, dass** die Kolonne von Flächenelementen (1a, 1b, 1c) von zwei bis acht, insbesondere von zwei bis sechs, vorzugsweise von vier bis sechs, Flächenelemente (1a,1b,1c) umfasst.

24. Vorrichtung nach einem der Ansprüche 20 bis 23, **dadurch gekennzeichnet, dass** jede einzelne Luftführungskammer (2) und jede einzelne aktive Deckenfläche (3) je einzeln an wenigstens zwei sich gegenüberliegenden, schienenförmigen Deckenrasterprofilen (25) befestigt, insbesondere aufgehängt, sind, wobei die Deckenrasterprofile (25) an Aufhängehalterungen an einer Deckenunterkonstruktion befestigt sind.

25. Vorrichtung nach einem der Ansprüche 20 bis 24, **dadurch gekennzeichnet, dass** die nach aussen gerichteten Seiten, also die sichtbaren Seiten, der aktiven Deckenflächen (3) mit wenigstens einer separat aufgehängten Folie (26), beispielsweise aus textilem Material oder aus Kunststoff, bespannt sind, wobei
- diese Folie (26) Mikrolöcher (27) aufweist,
- der freie Querschnitt in dieser Folie (26) im Vergleich zum freien Querschnitt in der aktiven Deckenfläche (3) entweder gleich gross oder grösser ist, und
- die Mikrolöcher (27) in der Folie (26) rund sind und im Vergleich zu den Mikrolöchern (4) in der aktiven Deckenfläche (3) entweder gleich gross oder grösser sind und in einer geraden oder versetzten, regelmässigen oder unregelmässigen Reihenanordnung vorhanden sind, und wobei
die Vorrichtung zur Temperierung von Raumluft und die separat aufgehängte Folie (26) miteinander im Wesentlichen luftdicht verbunden sind.

26. Vorrichtung nach einem der Ansprüche 20 bis 25, **dadurch gekennzeichnet, dass** ionisierte Zuluft eingespeist wird.

27. Vorrichtung nach einem der Ansprüche 20 bis 26, **dadurch gekennzeichnet, dass** sich zwischen den nach aussen gerichteten Seiten, also den sichtbaren Seiten, der aktiven Deckenflächen (3) und der separat aufgehängten Folie (26) wenigstens eine Lichtquelle (28) befindet, welche vorzugsweise an einem seitlichen Rahmen (29) befestigt ist.

## Claims

1. Flat element (1) for thermal adjustment of indoor air, which comprises
- an air conduct chamber (2) with an open bottom side,
- an active ceiling area (3) with micro-holes (4) that closes the air conduct chamber (2) at its open bottom side,
- an upper surface (5),
- several side walls (6a, 6b), and
- at least one opening (7) for the inlet of air, as well as
- an essentially hermetical connection between air conduct chamber (2) and active ceiling area (3),
**characterized in that**
it comprises
- at least one opening (8) for the outlet of air,
whereby into each opening (7) for the inlet of air and into each opening (8) for the outlet of air is inserted a connecting piece (9) in the form of a pipe and is essentially hermetically sealed, and
- the upper surface (5) of the air conduct chamber (2) is formed in such a way that it has at least one baffle (10) with at least one air conduct angle (11), whereby
-- this (these) baffle(s) (10) point(s) to the side of the active ceiling area (3), which is aligned to the inside of the flat element (1),
-- this (these) baffle(s) (10) generate(s) turbulences in an supplied air stream, and
-- this (these) baffle(s) (10) is (are) arranged crosswise to the connecting line between the opening(s) (7) for the inlet of air and the opening(s) (8) for the outlet of air, and
- the opening(s) (7) for the inlet of air and the opening(s) (8) for the outlet of air are arranged in opposite side walls (6a).

2. Flat element according to claim 1, **characterized in that** it comprises from two to ten baffles (10), especially two baffles (10), in the upper surface (5) of the air conduct chamber (2), and that the baffles (10) are shaped either sinuously or are cascaded, including any combinations thereof, whereby corresponding air conduct angles (11) are preferably chamfered, for example with a radius from 1 mm to 10 mm, preferably from 1 mm to 5 mm, especially of 3 mm.

3. Flat element according to one of claims 1 to 2, **characterized in that** the sinuously shaped baffles (10) have independent from each other the same or different wave lengths λ and with the same or different amplitudes ŷ, whereby an alignment with the same wave lengths λ and with the same or different amplitudes ŷ is preferred.

4. Flat element according to one of claims 1 to 3, **characterized in that** the cascaded shaped baffles (10) independent from each other are aligned symmetrically or asymmetrically and have either the same or different heights h and downs t, respectively, whereby a symmetrical alignment with the same or different heights h and downs t, respectively, is preferred.

5. Flat element according to one of claims 1 to 4, **characterized in that** the cross section through the respective present baffles (10) independent from each other has either the form of a triangle, especially the form of an isosceles triangle, or any polygonal form, including any combinations thereof.

6. Flat element according to one of claims 1 to 5, **characterized in that** in the case of a baffle (10) with a side length 1 of 600 mm the distance d between the lower end of the lowest air conduct angle (11) at this baffle (10) and the inward side of the active ceiling area (3) is from 1 mm to 25 mm, preferably from 1 mm to 20 mm, whereby in the presence of a plurality of baffles (10) the distance d is defined for each single baffle (10) individually.

7. Flat element according to one of claims 1 to 6, **characterized in that** the distance d between the lower end of an air conduct angle (11) of a baffle (10) and the inward side of the active ceiling area (3) is adjustable by means of a profile that is attachable, preferably adhesive or screwable, to the air conduct angle (11) and/or the baffle (10), whereby this profile is preferably round-shaped, for example with a radius from 1 mm to 10 mm, preferably from 1 mm to 5 mm, especially of 3 mm, and whereby in the presence of a plurality of baffles (10) the distance d is defined individually for each single baffle (10).

8. Flat element according to one of claims 1 to 7, **characterized in that** in the case of cascaded shaped baffles (10) having a triangular cross section
- the angle α between the lower part of the front side (12) and lower part of the back side (13) of a baffle (10) amounts from 72° to 134°, preferably from 95° to 110°, especially about 103°,
- the angle β between the upper part of the back side (14) of a first baffle (10) and the upper part of the front side (15) of a second baffle (10) amounts from 75° to 140°, preferably from 100° to 115°, especially about 102°,
- the angle γ between the side wall (6a) with the opening(s) (7) for the inlet of the air and the upper part of the front side (16) of a first baffle (10) amounts from 38° to 72°, preferably from 50° to 60°, especially about 52°, and that
- the angle δ between the side wall (6a) with the opening(s) (8) for the outlet of the air and the upper part of the back side (17) of the last baffle (10) amounts from 38° to 72°, preferably from 50° to 60°, especially about 52°,
whereby the angle γ and the angle δ have preferably the same value.

9. Flat element according to one of claims 1 to 8, **characterized in that** the upper surface (5) of the air conduct chamber (2) is made of one piece, and has the following partial elements:
- at the longitudinal sides located edges (18) with free press cuts (19) and with holes (20), that serve for the mounting with further parts,
- a first front side (6a) with an edge, that serves for the stabilization, and with one to three symmetrically arranged opening(s) (7) for the inlet of air, preferably with one in the middle arranged opening (7) for the inlet of air,
- a second front side (6a) with an edge, that serves for the stabilization, and with one to three symmetrically arranged opening(s) (8) for the outlet of air, preferably with one in the middle arranged opening (8) for the outlet of air, and that
in each opening (7) for the inlet of air and in each opening (8) for the outlet of air is inserted a connecting piece (9) in the form of a pipe and is essentially hermetically sealed, and
- five transverse, especially perpendicular, to the shortest connecting line between an opening (7) for the inlet and an opening (8) for the outlet of air arranged edges, along which the upper surface (5) of the air conduct chamber (2) is bent at the respective locations in an alternative way either downwards or upwards with the angles α, β, γ and δ, and thus form two baffles (10) having each a triangular cross section.

10. Flat element according to one of claims 1 to 9, **characterized in that** the upper surface (5) of the air conduct chamber (2) is connected with two side walls (6b) having holes (21) in an essentially hermetical way, for example with rivets ("Popnieten"), that are slided through the holes (20) in the lateral edges (18) and through the holes (21) in the side walls (6b), whereby said holes (20,21) are reconciled with each other, and whereby the side walls (6b) preferably have cut-outs, that are especially adapted to the edge guides of the present baffles (10).

11. Flat element according to one of claims 1 to 10, **characterized in that** on the outside of the upper surface (5) of the air conduct chamber (2) is applied an insulation material, for example a fire-proof polyurethane foam.

12. Flat element according to one of claims 1 to 11, **characterized in that** the air conduct chamber (2) is made of metal or of a metal alloy, for example of aluminum, zinc-plated steel plate, electrolytically zinc-plated steel plate, rustless steel plate, copper, brass.

13. Flat element according to one of claims 1 to 12, **characterized in that** the air conduct chamber (2) has a length from 40 cm to 160 cm, especially from 50 cm to 130 cm, preferably about 60 cm, a width from 40 cm to 80 cm, especially from 45 cm to 65 cm, preferably about 60 cm, and a height from 8 cm to 14 cm, especially from 10 cm to 14 cm, preferably about 12 cm.

14. Flat element according to one of claims 1 to 13, **characterized in that** the micro-holes (4) in the active ceiling area (3) are round and have a diameter from about 0.50 mm to about 1.20 mm, preferably from about 0.60 mm to about 1.00 mm, especially about 0.65 mm, and are present in a straight or staggered, regular or irregular in-line configuration.

15. Flat element according to one of claims 1 to 14, **characterized in that** the active ceiling area (3) is made of a metal plate, for example an electrolytically zinc-plated steel plate, and has a thickness from about 0.4 mm to about 1.5 mm, preferably from about 0.5 mm to about 0.8 mm, especially of about 0.6 mm.

16. Flat element according to one of claims 1 to 15, **characterized in that** the outward side, that is the visible side, of the active ceiling area (3) is left in an unprocessed state or that this side is surface-treated, for example for the purpose of colouring is powder-coated.

17. Flat element according to one of claims 1 to 16, **characterized in that** at least two opposite side walls (22) of the active ceiling area (3) have fixing parts and/or arrests (23), for example protruding embossings or neps.

18. Flat element according to one of claims 1 to 17, **characterized in that** the free cross-section in the active ceiling area (3) is from about 1 % to about 4 %, preferably at least about 2 %, referred to the total area of the active ceiling area (3).

19. Flat element according to one of claims 1 to 18, **characterized in that** the essentially hermetical interconnection between the air conduct chamber (2) and the active ceiling area (3) is realized by means of a sealing material (34), for example with a weather strip, especially made of a self-adhesive cell-caoutchouc.

20. Device for thermal adjustment of indoor air, especially for cooling of indoor air, **characterized in that** it comprises at least one column of flat elements (1a,1b,1c) according to one of claims 1 to 19 that are essentially hermetically sealed with each other.

21. Device according to claim 20, **characterized in that**
- the connecting piece (9) in the form of a pipe, that is inserted in the opening (7) for the inlet of air in a first air conduct chamber (2), is connected with a conduct in which is feed in supply air,
- the connecting piece (9) in the form of a pipe, that is inserted in the opening (8) for the outlet of air in the first air conduct chamber (2), is connected with the connecting piece (9) in the form of a pipe, that is inserted in the opening (7) for the inlet of air in the second air conduct chamber (2),
- all further air conduct chambers (2) are connected with each other in analogy to the connection of the first air conduct chamber (2) with the second air conduct chamber (2),
- the connecting piece (9) in the form of a pipe, that is inserted in the opening (8) for the outlet of air in the last air conduct chamber (2) of said column, is closed with an end cap (24), and whereby
- all aforementioned connections are essentially hermetical.

22. Device according to one of claims 20 to 21, **characterized in that** the connection between the individual air conduct chambers (2) is realized by means of a muffle having in its middle a stopper and with lip-seals.

23. Device according to one of claims 20 to 22, **characterized in that** the column of flat elements (1a, 1b, 1c) comprises from two to eight, especially from two to six, preferably from four to six, flat elements (1a, 1b, 1c).

24. Device according to one of claims 20 to 23, **characterized in that** each air conduct chamber (2) and each active ceiling area (3) is affixed, especially is hung up, individually on at least two opposite rail-shaped ceiling grid profiles (25), whereby the ceiling grid profiles (25) are affixed on hanging supports in the ceiling substructure.

25. Device according to one of claims 20 to 24, **characterized in that** the outward sides, that are the visible sides, of the active ceiling areas (3) are covered with at least one separate hung up foil (26), for example made of a textile material or made of plastics, whereby
- this foil (26) has micro-holes (27),
- the free cross-section in this foil (26) is in comparison to the free cross-section in the active ceiling area (3) either the same or is bigger, and
- the micro-holes (27) in the foil (26) are round and have in comparison to the micro-holes (4) in the active ceiling area (3) either the same size or are bigger and are present in a straight or staggered, regular or irregular in-line configuration, and whereby
the device for thermal adjustment of indoor air and the separately hung up foil (26) are essentially hermetically sealed with each other.

26. Device according to one of claims 20 to 25, **characterized in that** ionized supply air is feed in.

27. Device according to one of claims 20 to 26, **characterized in that** between the outward sides, that are the visible sides, of the active ceiling area (3) and the separately hung up foil (26) is arranged at least one light source (28), that is preferably fixed at a lateral frame (29).

## Revendications

1. Elément plat (1) de températion de l'air ambiant, lequel comprend
- une chambre de guidage de l'air (2) avec une face inférieure ouverte,
- une surface de plafond active (3) avec des microperforations (4), qui ferme la chambre de guidage de l'air (2) à sa face inférieure ouverte,
- une face supérieure (5),
- plusieurs parois latérales (6a, 6b) et
- au moins une ouverture (7) pour l'entrée de l'air, ainsi que
- une liaison essentiellement étanche à l'air entre la chambre de guidage de l'air (2) et la surface de plafond active (3),
**caractérisé en ce qu'**il présente
- au moins une ouverture (8) pour la sortie de l'air,
une tubulure de raccordement (9) étant introduite respectivement dans chaque ouverture (7) pour l'entrée de l'air et dans chaque ouverture (8) pour la sortie de l'air et reliée de manière essentiellement étanche à l'air, et
- la face supérieure (5) de la chambre de guidage de l'air (2) étant formée de telle façon qu'elle présente au moins une chicane (10) avec au moins une arête de guidage de l'air (11),
- cette (ces) chicane(s) (10) étant orientée(s) vers la surface de plafond active (3) qui est orientée vers l'intérieur de l'élément plat (1),
- cette (ces) chicane(s) (10) générant des turbulences dans un écoulement d'air amené, et
- cette (ces) chicane(s) (10) étant disposée(s) transversalement à la ligne de jonction entre la ou les ouvertures (7) pour l'entrée de l'air et la ou les ouvertures (8) pour la sortie de l'air, et
- la ou les ouvertures (7) pour l'entrée de l'air et la ou les ouvertures (8) pour la sortie de l'air se trouvant dans des parois latérales (6a) opposées.

2. Elément plat suivant la revendication 1, **caractérisé en ce qu'**il présente de deux à dix chicanes (10), en particulier deux chicanes (10), dans la face supérieure (5) de la chambre de guidage de l'air (2), et **en ce que** les chicanes (10) sont de forme soit ondulée soit étagée, y compris des combinaisons quelconques de celles-ci, des arêtes correspondantes de guidage de l'air (11) étant de préférence arrondies, par exemple avec un rayon de 1 mm à 10 mm, de préférence de 1 mm à 5 mm, en particulier de 3 mm.

3. Elément plat suivant l'une des revendications 1 à 2, **caractérisé en ce que** des chicanes (10) de forme ondulée présentent indépendamment l'une de l'autre des longueurs d'onde λ égales ou inégales et des amplitudes ŷ égales ou inégales, une disposition avec des longueurs d'onde λ égales et avec des amplitudes ŷ égales ou inégales étant préférée.

4. Elément plat suivant l'une des revendications 1 à 2, **caractérisé en ce que** des chicanes (10) de forme étagée sont disposées indépendamment l'une de l'autre de manière symétrique ou asymétrique et présentent respectivement des hauteurs h ou des profondeurs t égales ou inégales, une disposition symétrique avec respectivement des hauteurs h ou des profondeurs t égales ou inégales étant préférée.

5. Elément plat suivant l'une des revendications 1 à 4, **caractérisé en ce que** la section à travers les chicanes (10) respectivement présentes a indépendamment l'une de l'autre soit la forme d'un triangle, en particulier la forme d'un triangle isocèle, soit une forme polygonale quelconque, y compris des combinaisons quelconques de celles-ci.

6. Elément plat suivant l'une des revendications 1 à 5, **caractérisé en ce que**, pour une chicane (10) d'une longueur de côté 1 de 600 mm, la distance d entre l'extrémité inférieure de l'arête inférieure de guidage de l'air (11) de cette chicane (10) et le côté orienté vers l'intérieur de la surface de plafond active (3) est de 1 mm à 25 mm, de préférence de 1 mm à 20 mm et, en présence de plusieurs chicanes (10), la distance d étant définie individuellement pour chaque chicane (10) individuelle.

7. Elément plat suivant l'une des revendications 1 à 6, **caractérisé en ce que** la distance d entre l'extrémité inférieure de l'arête de guidage de l'air (11) d'une chicane (10) et le côté orienté vers l'intérieur de la surface de plafond active (3) est réglable à l'aide d'un profil pouvant être fixé, en particulier collé ou vissé, à l'arête de guidage de l'air (11) et/ou à la chicane (10), ce profil étant de préférence arrondi, par exemple avec un rayon de 1 mm à 10 mm, de préférence de 1 mm à 5 mm, en particulier de 3 mm, et, en présence de plusieurs chicanes (10), la distance d étant définie individuellement pour chaque chicane (10) individuelle.

8. Elément plat suivant l'une des revendications 1 à 7, **caractérisé en ce que**, pour des chicanes de forme étagée (10) d'une section triangulaire
- l'angle α entre la partie inférieure de la face frontale (12) et la partie inférieure de la face arrière (13) d'une chicane (10) est de 72° à 134°, de préférence de 95° à 110°, en particulier d'environ 103°,
- l'angle β entre la partie supérieure de la face arrière (14) d'une première chicane (10) et la partie supérieure de la face frontale (15) d'une deuxième chicane (10) est de 75° à 140°, de préférence de 100° à 115°, en particulier d'environ 102°,
- l'angle γ entre la paroi latérale (6a) avec la ou les ouvertures (7) pour l'entrée de l'air et la partie supérieure de la face frontale (16) d'une première chicane (10) est de 38° à 72°, de préférence de 50° à 60°, en particulier d'environ 52°, et **en ce que**
- l'angle δ entre la paroi latérale (6a) avec la ou les ouvertures (8) pour la sortie de l'air et la partie supérieure de la face arrière (17) de la dernière chicane (10) est de 38° à 72°, de préférence de 50° à 60°, en particulier d'environ 52°,
l'angle γ et l'angle δ étant de préférence égaux.

9. Elément plat suivant l'une des revendications 1 à 8, **caractérisé en ce que** la face supérieure (5) de la chambre de guidage de l'air (2) est fabriquée d'une seule pièce et comprend les éléments partiels suivants:
- des rebords (18) disposés aux côtés longitudinaux avec des découpes de dégagement (19) et des trous (20), qui servent à la fixation à d'autres pièces,
- une première face frontale (6a) avec un rebord, qui sert à la stabilisation, et avec une à trois ouvertures (7) disposées symétriquement pour l'entrée de l'air, de préférence avec une ouverture (7) disposée au centre pour l'entrée de l'air,
- une deuxième face frontale (6a) avec un rebord, qui sert à la stabilisation, et avec une à trois ouvertures (8) disposées symétriquement pour la sortie de l'air, de préférence avec une ouverture (8) disposée au centre pour la sortie de l'air, et **en ce**
**qu'**une tubulure de raccordement (9) est introduite respectivement dans chaque ouverture (7) pour l'entrée de l'air et dans chaque ouverture (8) pour la sortie de l'air et est reliée de manière essentiellement étanche à l'air, et
- cinq rebords sont disposés transversalement, en particulier verticalement, à la ligne de jonction la plus courte entre une ouverture (7) pour l'entrée de l'air et une ouverture (8) pour la sortie de l'air, le longs desquels la face supérieure (5) de la chambre de guidage de l'air (2) est repliée alternativement vers le bas et vers le haut des angles α, β, γ et δ aux endroits correspondants, et forment ainsi deux chicanes (10), chacune de section triangulaire.

10. Elément plat suivant l'une des revendications 1 à 9, **caractérisé en ce que** la face supérieure (5) de la chambre de guidage de l'air (2) est reliée de manière essentiellement étanche à l'air à deux parois latérales (6b) présentant des trous (21), par exemple à l'aide de rivets aveugles qui sont insérés à travers les trous (20) dans les rebords latéraux (18) et les trous (21) dans les parois latérales (6b), les trous mentionnés (20,21) étant adaptés les uns aux autres et les parois latérales (6b) présentant de préférence des évidements qui sont en particulier adaptés à l'arête des chicanes (10) existantes.

11. Elément plat suivant l'une des revendications 1 à 10, **caractérisé en ce qu'**un matériau isolant, par exemple une mousse de polyuréthanne ininflammable, est appliqué sur le côté extérieur de la face supérieure (5) de la chambre de guidage de l'air (2).

12. Elément plat suivant l'une des revendications 1 à 11, **caractérisé en ce que** la chambre de guidage de l'air (2) est fabriquée dans un métal ou un alliage métallique, par exemple en aluminium, en tôle d'acier préalablement galvanisée, en tôle d'acier galvanisée électrolytiquement, en tôle d'acier inoxydable, en cuivre, en laiton.

13. Elément plat suivant l'une des revendications 1 à 12, **caractérisé en ce que** la chambre de guidage de l'air (2) a une longueur de 40 cm à 160 cm, en particulier de 50 cm à 130 cm, de préférence d'environ 60 cm, une largeur de 40 cm à 80 cm, en particulier de 45 cm à 65 cm, de préférence d'environ 60 cm, et une hauteur de 8 cm à 14 cm, en particulier de 10 cm à 14 cm, de préférence d'environ 12 cm.

14. Elément plat suivant l'une des revendications 1 à 13, **caractérisé en ce que** les microperforations (4) dans la surface de plafond active (3) sont rondes et ont un diamètre d'environ 0,50 mm à environ 1,20 mm, de préférence d'environ 0,60 mm à environ 1,00 mm, en particulier d'environ 0,65 mm, et sont présentes selon une disposition en rangée droite ou décalée, régulière ou irrégulière.

15. Elément plat suivant l'une des revendications 1 à 14, **caractérisé en ce que** la surface de plafond active (3) est fabriquée dans une tôle métallique, par exemple une tôle d'acier galvanisée électrolytiquement, et a une épaisseur d'environ 0,4 mm à environ 1,5 mm, de préférence d'environ 0,5 mm à environ 0,8 mm, en particulier d'environ 0,6 mm.

16. Elément plat suivant l'une des revendications 1 à 15, **caractérisé en ce que** le côté orienté vers l'extérieur, à savoir le côté visible, de la surface de plafond active (3) est laissé à l'état brut, ou **en ce que** ce côté est traité en surface, par exemple peint par poudrage aux fins de coloration.

17. Elément plat suivant l'une des revendications 1 à 16, **caractérisé en ce qu'**au moins deux parois latérales opposées (22) de la surface de plafond active (3) présentent des pièces de retenue et/ou des dispositifs de blocage (23), par exemple des empreintes ou des gaufrages en saillie.

18. Elément plat suivant l'une des revendications 1 à 17, **caractérisé en ce que** la section libre dans la surface de plafond active (3) est d'environ 1 % à environ 4 %, de préférence d'au moins environ 2 %, rapportée à la surface totale de la surface de plafond active (3).

19. Elément plat suivant l'une des revendications 1 à 18, **caractérisé en ce que** la liaison essentiellement étanche à l'air entre la chambre de guidage de l'air (2) et la surface de plafond active (3) se fait à l'aide d'un matériau d'étanchéité (34), par exemple une bande d'étanchéité, en particulier un caoutchouc cellulaire autocollant.

20. Dispositif de températion d'air ambiant, en particulier de réfrigération d'air ambiant, **caractérisé en ce qu'**il comprend au moins une colonne d'éléments plats (1a, 1b, 1c) suivant l'une des revendications 1 à 19, lesquels sont reliés entre eux de manière essentiellement étanche à l'air.

21. Dispositif suivant la revendication 20, **caractérisé en ce que**
- la tubulure de raccordement (9) qui se trouve dans l'ouverture (7) pour l'entrée de l'air dans une première chambre de guidage de l'air (2) est reliée à une tuyauterie dans laquelle l'air amené est introduit,
- la tubulure de raccordement (9) qui se trouve dans l'ouverture (8) pour la sortie de l'air dans la première chambre de guidage de l'air (2) est reliée à la tubulure de raccordement (9) qui se trouve dans l'ouverture (7) pour l'entrée de l'air dans la deuxième chambre de guidage de l'air (2),
- toutes les autres chambres de guidage de l'air (2) sont reliées entre elles de manière analogue à la liaison de la première chambre de guidage de l'air (2) avec la deuxième chambre de guidage de l'air (2),
- la tubulure de raccordement (9) qui se trouve dans l'ouverture (8) pour la sortie de l'air dans la dernière chambre de guidage de l'air (2) de la colonne citée est fermée par un capuchon de fermeture (24),
- toutes les liaisons étant essentiellement étanches à l'air.

22. Dispositif suivant l'une des revendications 20 à 21, **caractérisé en ce que** la liaison entre les différentes chambres de guidage de l'air (2) est réalisée à l'aide d'un manchon avec une butée centrale et des joints à lèvres.

23. Dispositif suivant l'une des revendications 20 à 22, **caractérisé en ce que** la colonne d'éléments plats (1a, 1b, 1c) comprend de deux à huit, en particulier de deux à six, de préférence de quatre à six, éléments plats (1a, 1b, 1c).

24. Dispositif suivant l'une des revendications 20 à 23, **caractérisé en ce que** chaque chambre individuelle de guidage de l'air (2) et chaque surface de plafond active (3) individuelle est fixée individuellement, en particulier suspendue, à au moins deux profilés opposés de module de plafond en forme de rail (25), les profilés de module de plafond (25) étant fixés à des dispositifs de fixation de suspension d'une construction de faux plafond.

25. Dispositif suivant l'une des revendications 20 à 24, **caractérisé en ce que** les côtés orientés vers l'extérieur, à savoir les côtés visibles, des surfaces de plafond actives (3) sont recouverts d'au moins un film (26) accroché séparément, par exemple en matériau textile ou en matière plastique,
- ce film (26) comprenant des microperforations (27),
- la section libre dans ce film (26) étant par comparaison avec la section libre dans la surface de plafond active (3) soit égale ou plus grande, et
- les microperforations (27) dans le film (26) étant rondes et en comparaison avec les microperforations (4) dans la surface de plafond active (3) soit de même taille soit plus grandes et présentes selon une disposition en rangée droite ou décalée, régulière ou irrégulière, et
le dispositif de températion de l'air ambiant et le film accroché séparément (26) étant reliés entre eux de manière essentiellement étanche à l'air.

26. Dispositif suivant l'une des revendications 20 à 25, **caractérisé en ce qu'**on alimente en air ionisé.

27. Dispositif suivant l'une des revendications 20 à 26, **caractérisé en ce qu'**au moins une source de lumière (28) se trouve entre les côtés orientés vers l'extérieur, à savoir les côtés visibles, des surfaces de plafond actives (3) et le film (26) accroché séparément, laquelle est fixée de préférence à un cadre latéral (29).
